Europäisches Patentamt

European Patent Office

Office européen des brevets

(11) Publication number: **0 176 115**
**A1**

## (12) EUROPEAN PATENT APPLICATION

(21) Application number: **85201182.4**

(22) Date of filing: **12.07.85**

(51) Int. Cl.⁴: **C 04 B 35/26**
**//H01F1/34**

(30) Priority: **27.08.84 NL 8402601**

(43) Date of publication of application:
**02.04.86 Bulletin 86/14**

(84) Designated Contracting States:
**DE FR GB**

(71) Applicant: **N.V. Philips' Gloeilampenfabrieken
Groenewoudseweg 1
NL-5621 BA Eindhoven(NL)**

(72) Inventor: **Koppens, Leonardus Josephus
c/o INT. OCTROOIBUREAU B.V. Prof. Holstlaan 6
NL-5656 AA Eindhoven(NL)**

(74) Representative: **Koppen, Jan et al,
INTERNATIONAAL OCTROOIBUREAU B.V. Prof.
Holstlaan 6
NL-5656 AA Eindhoven(NL)**

(54) Magnet core based on lithium-zinc-magnanese ferrite.

(57) In order to obtain a soft magnetic ferrite having a high density and a low value of the loss factor, $Bi_2O_3$ and/or $V_2O_5$ is or are added to an LiZmMn ferrite of the composition $(Li_{0.5} Fe_{0.5})_{1-z-a-y} Zn_z Co_a Mn_y \, ^{II}Mn_x \, ^{III}Fe_{2-x+\delta}O_{4\frac{3}{2}\delta+\epsilon}$

with
$$0.05 \leq z \leq 0.62$$
$$0 \leq a \leq 0.05$$
$$0.01 \leq x+y \leq 0.25$$
$$-0.2 \leq \delta \leq +0.5$$
$$-0.5\epsilon \leq \leq +0.25a$$

The quantities of $Bi_2O_3$ and $V_2O_5$ are maximally 0.15 and 0.20% by weight, respectively, but collectively they are never more than 0.20% by weight nor less than 0.005% by weight.

FIG.6

EP 0 176 115 A1

0176115
18-02-1985

"Magnet core based on lithium-zinc-manganese ferrite".

The invention relates to a magnet core of oxidic ferromagnetic material consisting of a spinel ferrite having a cubic crystal structure.

Magnet cores of oxidic ferromagnetic material consisting of a spinel ferrite having a cubic crystal structure are used in large numbers in induction coils and in transformers in the field of telecommunication and industrial and consumer electronics. Depending on the application, the materials in question may be divided into four types.

- The first type is a low-loss ferrite destined for high-quality coils which are used in filters. The magnet cores are usually circular or square pot cores.

- The second type has a high magnetic initial permeability and is destined for low-power wideband and pulse transformers. The magnet cores are usually toroids, E-cores and various types of pot cores.

- The third type is suitable for high-power applications, for example, power transformers operating in the frequency range from 10 to 100 kHz. The range of powers with which such transformers are operated typically extends from 10-750 W. The magnet cores in this case are usually U-cores or E-cores.

- The fourth type is destined for use in magnet cores for high-quality coils which are used in the frequency range from 2-12 MHz. The magnet cores are usually pot cores, toroids, rods or beads.

Further applications not mentioned hereinbefore are magnet cores for aerial rods, interference suppressors and particle accelerators. Memory cores typically are not included.

For application at higher freqeuncies (in particular higher than 1 MHz) Ni-Zn ferrite has so far been used as a magnet core material in connection with its high resistance ($\rho > 10^5 \ \Omega$ .cm). Due to the high price of Ni-Zn ferrites, attempts have been made to find a replacement ferrite system having comparable electrical and magnetic properties.

The invention provides a magnet core based on such a ferrite system. This is characterized by the following composition

$$(Li_{0.5} Fe_{0.5})_{1-z-a-y} Zn_z Co_a Mn_y^{II} Mn_x^{III} Fe_{2-x+\delta} O_{4+\frac{3}{2}\delta+\varepsilon}$$

with
$$0.05 \leq z \leq 0.62$$
$$0 \leq a \leq 0.05$$
$$0.01 \leq x+y \leq 0.25$$
$$-0.2 \leq \delta \leq +0.50$$
$$-0.5 \leq \varepsilon \leq +0.25a$$

to which has additionally been added

$$\underline{p} \text{ wh. } \% \ Bi_2O_3 + \underline{q} \text{ wt. } \% \ V_2O_5$$

in which
$$0 \leq p \leq 0.15$$
$$0 \leq q \leq 0.20$$
$$0.005 \leq p+q \leq 0.20$$

In addition to a cost-saving of approximately 30% of the cost of a Ni-Zn ferrite which the use of this ferrite system based on Li-Zn-Mn ferrite in magnet cores provides, an important advantage proves to be that with the very small additions of $Bi_2O_3$ and/or $V_2O_5$ which the invention prescribes, a material can be realized which couples ver low losses with an increased density. This comparison is made with the same ferrite material, sintered at the same temperature, but without these additions.

If more $Bi_2O_3$ and/or $V_2O_5$ is added than is prescribed by the invention, the material can be sintered at an, optionally, considerable, lower temperature, it is true, but then it does not appear to be possible to realize magnet cores having the above-mentioned very low losses.

It has been found that the addition of $V_2O_5$ is substantially equally effective as the addition of $Bi_2O_3$, so that either $Bi_2O_3$ alone, or $V_2O_5$ alone, or $Bi_2O_3$ and $V_2O_5$ together, may be added. With an additional of at least 0.005 % by weight, a material is already obtained having a sufficiently high density.

The starting material should preferably comprise an excess of Fe and that in such manner that $\delta$ in the above-given composition formula is in the range from 0.2 to 0.4. At these values of $\delta$ , the

addition of very small quantities of $Bi_2O_3$ and/or $V_2O_5$ according to the invention has proved to be most effective, i.e. an optimum combination of high density and low losses could be realized.

The present of a small but specific quantity of Mn, in combination with $Bi_2O_3$ and/or $V_2O_5$ as a sintering agent, proves to be essential to obtain a high electric resistance and low losses comparable to the losses of Ni-Zn ferrite. Depending on the quantities of Zn, Fe, $Bi_2O_3$ and $V_2O_5$, the quantity of Mn should vary from 0.01 to 0.25 formula units.

A further aspect of the Li-Zn-Mn ferrite system described hereinbefore is that, in particular by variation of the Li-Zn ration (i.e. by variation of $\underline{z}$ in the range from 0.05 to 0.62), it supplies a number of materials which satisfy a bariety of specifications.

In particular, with a zinc content $\underline{z}$ of 0.3 to 0.4 formula units, materials having magnetic permeabilities of 120 can be re=alized which:are extremely suitable for manufacturing cores for coil formers.

The addition of at most 0.05 formula units of Co leads to material having lower osses and the temperature factor of the permeability can also be controlled by means of the Co content.

A number of experiments which support the invention will be described hereinafter with reference to the Figures.

Figure 1 is a graph on which a number of isopermeability curves are plotted, each curve showing the sintering temperature $T_s$ and the quantities p (% by weight) of $Bi_2O_3$ used to produce a number of Li-Mn-Zn-Co ferrite cores having the same magnetic permeability, using the same ferrite starting composition.

Figure 2 is of similar form to Figure 1, but in this Figure the "isoloss factors" $\dfrac{\tan\delta}{\mu_i} \cdot 10^{-6}$ at 2 MHz are indicated.

Figure 3 is similar to Figure 2, but in this Figure the "isoloss factors" at 10 MHz are indicated.

Figure 4 is of similar form to Figure 1 but in this Figure the "isodensities" (in $g/cm^3$) are indicated.

Figure 5 is a graph showing on the one hand the sintering temperature $T_s$ which is necessary to realize, starting from a given Li-Zn-Mn-Co ferrite composition, magnet cores having a magnetic permeability 100 as a function of the addition of $V_2O_5$ (expressed in

$q$ % by weight), and on the other hand indicates the density $\underline{d}$ (in $g/cm^3$) of the magnet cores as a function of the addition of $V_2O_5$ (expressed in $\underline{q}$ % by weight).

Figure 6 is a graph showing the loss factor $\frac{\tan\varsigma}{\mu_i} \times 10^{-6}$ of the magnet cores of Figure 5 as a function of the addition of $V_2O_5$ (expressed in $\underline{q}$ % by weight). The loss factor was measured at 2 MHz and at 10 MHz.

Figure 7 is a graph which on the one hand shows the density $\underline{d}$ (in $q/cm^3$) and on the other hand the variation of the density with the sintering temperature $\frac{dd}{dT_s}$ (in $q/cm^3 \, {}^{o}C$) as a function of the Fe-excess $\delta$ of a number of Li-Mn-Zn-Co ferrite cores according to the invention.

Figure 8 is graph showing on the one hand the loss factor $\frac{\tan\varsigma}{\mu_i} \cdot 10^{-6}$ at 2 MHz as a function of the Fe-excess $\delta$ and on the other hand the loss factor at 10 MHz of the Figure 7 cores.

Figure 9 is a graph showing the loss factor $\frac{\tan\varsigma}{\mu_i} \times 10^{-6}$ at 15 MHz as a function of the Fe-excess $\delta$ of the Figure 7 cores.

Figure 10 is a graph showing the initial permeability $\mu_i$ as a function of the Fe-excess $\delta$ of the Figure 7 cores.

Figure 11 is a graph which on the one hand shows the temperature coefficient TF in the range from 5-25$^{o}$C and on the other hand the temperature coefficient of the permeability TF in the range from 25 - 75 $^{o}$C of the Figure 7 cores as a function of the Fe-excess $\delta$ . And

Figure 12 is graph showing the sintering temperatures $T_s$ at which the magnet cores of Figure 7 were sintered in dependence of the Fe-excess $\delta$ .

Example I

For the preparation of a number of annular magnet cores having a composition of the type $(Li_{0.285}Fe_{0.285}) \, Zn_{0.374} \, Co_{0.019}$ $Mn_{0.175} \, Fe_{2.150} \, O_{4+\triangle} + \underline{p}$ wt.% $Bi_2O_3$ $+\underline{q}$ wt.% $V_2O_5$

419 g of $Fe_2O_3$ + 65.70 g of ZnO + 22.72 g of $Li_2CO_3$ + 9.31 g of $MnCO_3$ + 5.0 g of $CoCO_3$ + $\underline{x}$ g of $Bi_2O_3$ + $\underline{y}$ g of $V_2O_5$ were weighed and ground with 600 ml of alcohol in a 2 litre ball mill for 6 hours. The mixture was evaporated to dryness, prefired at 900$^{o}$C

in air for 2 hours and again ground in the 2 litre ball mill, this time with 500 ml of water for 6 hours. After evaporating to dryness, rings ($\emptyset_i$ / $\emptyset_o$ = 14/16 mm) were compressed from the mixture. They were sintered in an oxygen-containing atmosphere (the heating/cooling rate was 150$^{\circ}$C/hour). The rings were kept at the peak temperature for 2 hours.

In the table below the properties are recorded of annular magnet cores with the addition of either $Bi_2O_3$ or $V_2O_5$, compared with annular magnet cores having the same composition but without any addition.

TABLE

| Experiment No. | $Bi_2O_3$ (Wt.%) | $V_2O_5$ (Wt.%) | Sintering temperature $^{\circ}C$ | $\mu_i$ | density (g/cm$^3$) | $\dfrac{\tan\delta}{\mu_i}$ x $10^{-6}$ | |
|---|---|---|---|---|---|---|---|
| | | | | | | 2MHz | 10MHz |
| 43 | | | 1125 | 127 | 4.25 | 34 | 80 |
| 45 | 0.04 | | 1125 | 140 | 4.44 | 28 | 73 |
| 49 | | 0.08 | 1125 | 120 | 4.42 | 30 | 76 |

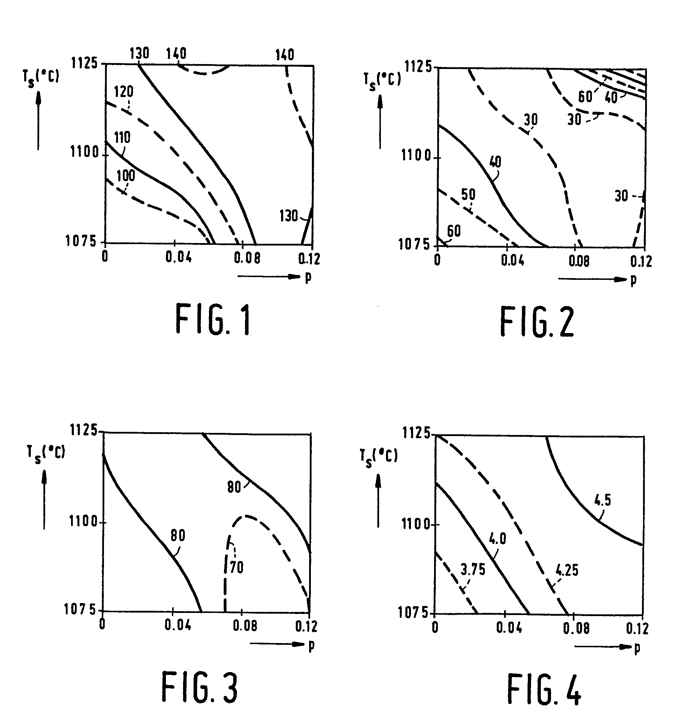

The graphs of Figures 1-4 show a number of properties of annular magnet cores having the starting composition as described hereinbefore. In the manufacture the sintering temperature was varied in the range from 1075 to 1125$^{\circ}$C and the addition p ($Bi_2O_3$) was varied in the range from 0 to 0.12 percent by weight. The lines in the graphs are isolines; they interconnect points of the same value of permeability (Figure 1) and loss factor, respectively, at 2 MHz (Figure 2) and 10 MHz (Figure 3), respectively, and the density (Figure 4).

It will be obvious from Figures 1 - 4 that by the addition of a very small quantity of $Bi_2O_3$ an Li-Zn-Mn-Co ferrite with excellent properties can be obtained.

EXAMPLE II

In the same manner as described in Example I a number of annular magnet cores were manufactured having a composition of the type $Li_{0.33} Fe_{0.33} Zn_{0.27} Co_{0.04} Mn_{0.09} Fe_{2.27} O_{4+\Delta}$ to which q % by weight of $V_2O_5$ had been added.

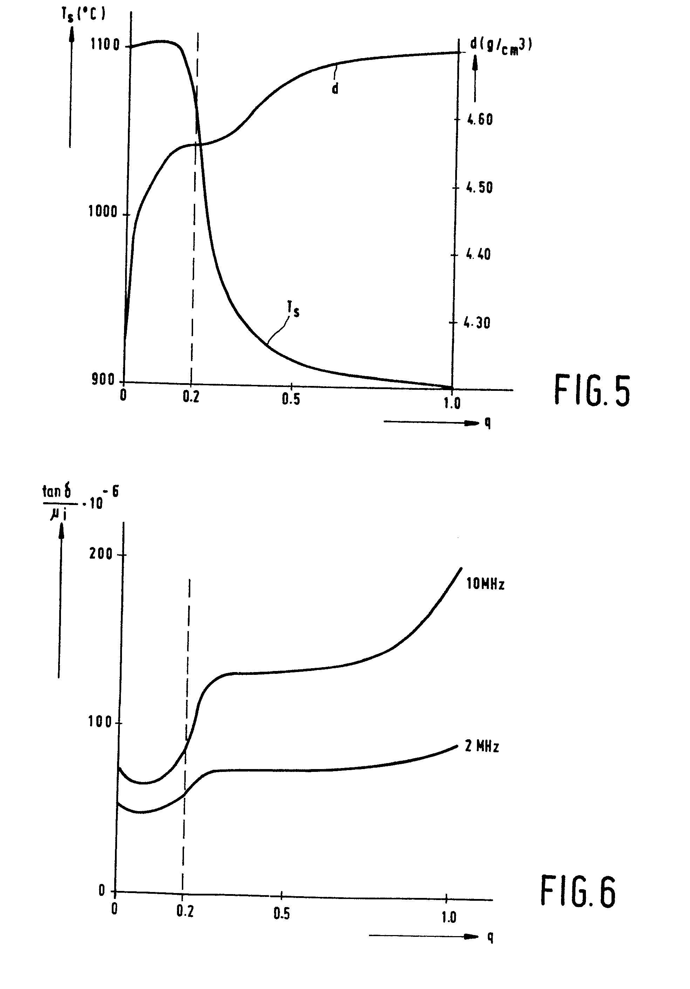

Figure 5 shows on the one hand the sintering temperatures

$T_s$ which were necessary to provide, with given $V_2O_5$ additions $\underline{q}$ (in % by weight), annular cores of the above-mentioned composition having a permeability $\mu_i = 100$. On the other hand Figure 5 shows the densities of the annular cores thus obtained as a function of the $V_2O_5$ addition $\underline{g}$. Especially in the range from 0 to 0.2 % by weight of $V_2O_5$ addition, the density proves to increase very considerably.

Figure 6 shows the loss factors $\dfrac{\tan \delta}{\mu_i} \times 10^{-6}$ at 2MHz and 10MHz of annular cores having the composition described in Figure 5 and the manufacturing method as a function of the $V_2O_5$ addition $\underline{g}$ (in % by weight). It has been found that minimum loss factors are realized in the range from 0 to 0.2 % by weight.

EXAMPLE III

If, on the basis of the data of Figures 1 - 4, a certain quantity of $Bi_2O_3$) addition is chosen, then it appears that the properties can even be further improved by a correct choice of the Fe-excess of the Li-Mn-Zn ferrite composition to be manufactured.

In the same manner as described in Example I, a number of annular magnet cores were manufactured having a composition of the type $(Li_{0.285} Fe_{0.285}) Zn_{0.374} Co_{0.019} Mn_{0.175} Fe_{2+\delta} O4_{+\Delta}$ + 0.04 % by weight of $Bi_2O_3$. The Fe-excess $\delta$ varies in the range from 0.09 to 0.33.

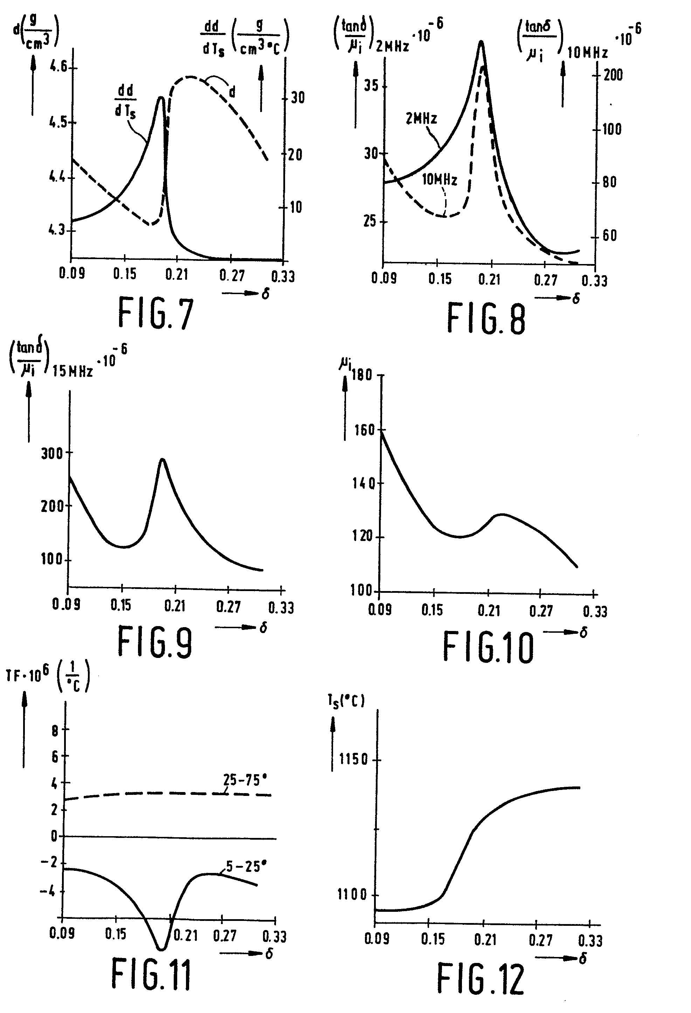

In the graphs of Figures 7 - 11 a number of properties are recorded of the annular cores thus obtained as a function of the Fe-excess $\delta$.

Figure 7 shows on the one hand the density $\underline{d}$ as a function of $\delta$, and on the other hand the variation of the density with the sintering temperature $\dfrac{dd}{dT_s}$. It will be obvious that by a correct choice of the Fe-excess, with a given quantity of addition, the density can be optimized. It also appears that there is a range of $\delta$-values where the density depends very slightly on the temperature at which sintering is carried out.

Figures 8, 9, 10 and 11 show how the loss factor at 2MHz, 10MHz and 15MHz, respectively, the permeability, and the temperature coefficient of the permeability can be optimized by a correct choice of the Fe-excess with a given quantity of addition.

Figure 12 shows the optimum sintering temperature for each individual value of the Fe-excess $\varsigma$ in the range from 0.09 to 0.33. Said sintering temperatures were used in the manufacture of the annular cores of which Figures 7 - 11 show a number of properties. The preferential range of $\varsigma$ : $0.2 \leq \varsigma \leq 0.4$ in this case proves to correspond with the range of sintering temperatures from approximately $1125^{O}C$ to approximately $1150^{O}C$.

It is to be noted that Co in an oxidizing medium can become 3-valent. In order to obtain a useful material it should be ensured that sintering is carried out under such conditions that at most half of the Co ions becomes 3-valent. This means that in the formula which describes the composition of the ferrite material from magnet cores according to the invention:

$$(Li_{0.5} Fe_{0.5})_{1-z-a-y} Zn_z Co_a Mn_y^{II} Mn_x^{III} Fe_{2-x+}^{\cdot} O_4 +\frac{3}{2}\varsigma + \epsilon$$

the upper limit of $\epsilon$ is equal to +0.25 a.

The lower limt of $\epsilon$ is determined by the condition that at higher sintering temperatures, or in a less oxidizing medium, the Mn can become fully 2-valent. In order to account for this, the lower limit of $\epsilon$ is equal to -0.5x.

## CLAIMS

1.      A magnet core of oxidic, ferromagnetic material consisting of a spinel ferrite having a cubic crystal structure, characterized in that the ferrite has the following composition:

$$(Li_{0.5} Fe_{0.5})_{1-z-a} Zn_z Co_a Mn_y^{II} Mn_x^{III} Fe_{2-x+\delta} O_{4 +\frac{3}{2} + \zeta + \xi}$$

with    $0.05 \leq z \leq 0.62$

$0 \leq a \leq 0.05$

$0.01 \leq x+y \leq 0.25$

$-0.2 \leq \delta \leq +0.5$

$-0.5x \leq \xi \leq +0.25a$

to which has additionally been added:

p wt. % $Bi_2O_3$ and q wt. % $V_2O_5$

in which    $0 \leq p \leq 0.15$

$0 \leq q \leq 0.20$

$0.005 \leq p+q \leq 0.20$

2.      A magnet core as claimed in Claim 1, characterized in that $0.2 \leq \delta \leq 0.4$.

3.      A magnet core as claimed in Claim 1 or 2, characterized in that $0.3 \leq Z \leq 0.4$.

FIG.1

FIG.2

FIG.3

FIG.4

FIG.5

FIG.6

3/3

0176115

FIG.7

FIG.8

FIG.9

FIG.10

FIG.11

FIG.12

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | DE-A-2 022 027 (HITACHI LTD.) * Claims 1-10; page 5, lines 4-12 * | 1,3 | C 04 B   35/26 // H 01 F    1/34 |
| Y | CHEMICAL ABSTRACTS, vol. 85, no. 18, November 1976, page 907, no. 136292j, Columbus, Ohio, US; & JP - A - 76 55 996 (TOHOKU METAL INDUSTRIES, LTD.) 17-05-1976 * Abstract * | 1,3 | |
| A | DE-A-2 251 368 (HITACHI LTD.) * Claims 1,2; page 5 * | 1,3 | |
| A | GB-A-2 019 828 (THOMSON-CSF) * Claim 1; page 2, lines 16-21; page 3, lines 20-29; page 6, tables 7,8 * | 1-3 | |
| | | | **TECHNICAL FIELDS SEARCHED (Int. Cl 4)** |
| A | FR-A-2 291 594 (R.T.C. LA RADIOTECHNIQUE-COMPELEC) * Claim 1; page 4, lines 3-16 * | 1 | C 04 B |

The present search report has been drawn up for all claims

| Place of search | Date of completion of the search | Examiner |
|---|---|---|
| THE HAGUE | 09-12-1985 | SCHURMANS H.D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82